# EUROPEAN PATENT APPLICATION

(11) **EP 4 765 841 A1**
(43) Date of publication of application: **24.06.2026**
(21) Application number: 24383439.7
(22) Date of filing: 20.12.2024
(51) Int. Cl.: H04N 23/55, H04N 23/57

(54) **CAMERA MODULE AND ASSEMBLING METHOD**

(71) Applicant: Ficosa Automotive, S.L.U., 08232 Viladecavalls (ES)
(72) Inventor: ALONSO OLIVA, Daniel, 08232 VILADECAVALLS (ES)
(74) Representative: ZBM Patents - Zea, Barlocci & Markvardsen

(57) **Abstract**

The camera module for vehicles comprises a housing assembly, an electronics carrier received within an inner space of the housing assembly, an image sensor coupled to a first main surface of the electronics carrier, and a lens assembly being in optical communication with the image sensor so as to acquire a captured image. Also, the lens assembly and the electronics carrier are attached to each other. Furthermore, an inner side of the housing assembly contacts the first main surface of the electronics carrier and/or a lens flange of the lens assembly. The lens assembly is a projection that extends radially outwards from the lens assembly. A method for assembling a camera module is also provided.

## Description

### TECHNICAL FIELD

The present disclosure relates to camera modules. Particularly, to a camera module for motor vehicles provided with a camera housing that encloses an electronics carrier that receives an image sensor, wherein the electronics carrier and a lens assembly are attached to each other, and wherein an inner side of the housing assembly contacts at least one of the electronics carrier and a lens flange that projects radially outwards from the lens assembly, the electronics carrier being fixed in place without fasteners. The present disclosure further relates to a method of assembling said camera module.

### BACKGROUND

Modern vehicles are increasingly equipped with vision systems as part of advanced driver assistance systems (ADAS). Such vision systems may include a front camera module, a back camera module, a side camera module and/or any camera module arranged in the vehicle providing different views such as a digital mirror system view, a front-view, a rear-view, a surrounding view, a top-view or bird's eye view, etc. In addition, the vision system may also contain object detection and warning systems, and vehicle trajectory prediction means. The vision systems may be part of autonomous motor vehicles.

Camera modules for motor vehicles in the automotive sector may be part of or connected to the above-mentioned vision systems. Further, known camera modules comprise a housing assembly formed of two or more housing parts, for example, a first housing part, also referred to as front housing, and a second housing part, also referred to as back housing. In use, when joined to each other, the housing parts define together an inner space where an electronics carrier is suitably received.

The image sensor is coupled to the electronics carrier. In order to ensure good image quality, a lens assembly and the image sensor are optically aligned with respect to each other. It is critical that the lens assembly and the image sensor remain both optically aligned over the service life of the camera module such that optical communication is not lost.

Usually, the electronics carrier is mechanically fixed to the front housing by means of fasteners, for example, screws passing through the material of the electronics carrier as disclosed, for example, in WO2006136208 A1 and US20140036084 A1. The use of screws has been found to be undesirable as it is complex and time consuming in assembly operations.

Particularly, the use of screws is time consuming and in practice it may give rise to problems in automated assembling through robots in mass production environments within the automotive field.

Also, attachment of the electronics carrier to the front housing through the use of screws has been found to be inefficient for avoiding or at least minimizing buckling or bending of the electronics carrier as a result of changes in temperature. That is, temperature changes have a significant impact on the location of the image sensor due to bending of the electronics carrier that tends to lose its optical communication with the lens assembly.

Additionally, prior art camera modules are provided with the lens assembly attached to the front housing by means of a thread or more recently by an adhesive medium such as glue. When adhesive medium is employed, lens assemblies are provided with a lens flange that contacts the external surface of the front housing. In fact, the adhesive medium is used for attaching the lens flange to the external surface of the front housing. Therefore, the lens flange remains outside the housing assembly. In any case, these arrangements depend so much on manufacturing and assembling tolerances, where nominal dimensions differ from real dimensions. It affects the optical communication of the image sensor and the lens assembly. As a consequence, an increase of resolution of the image sensor may negatively affect the image quality due to lack of optical alignment between the image sensor and the lens assembly.

An additional drawback of known camera modules is that depending on the application, the length of the lens assembly may change and consequently the housing assembly has to be changed accordingly in shape and / or geometry in order to receive the lens assembly. This means that the housing assembly will need to be redesigned when changing the application of the camera module or even when the camera module is mounted to a different vehicle.

It would be therefore desirable to provide an improved camera module and assembling method in order to obviate the above-mentioned drawbacks and to provide advantageous solutions to the shortcomings in the prior art.

### SUMMARY

It is an object of the present invention to provide a camera module for vehicles that may be incorporated to a motor vehicle. In fact, the present camera module is a (motor) vehicle camera module that may be part of or electrically connected to a vehicle vision system. The vehicle vision system belongs to the technical field of ADAS (advanced driver assistance systems).

The camera module comprises a housing assembly, an electronics carrier, an image sensor, and a lens assembly.

The lens assembly may define an optical axis. The optical axis corresponds, within the meaning of the present disclosure, to a straight line that passes through the geometrical center of the lens assembly. The lens assembly may comprise an optical body and a lens housing to receive the optical body. The optical body may include a plurality of optical elements (i.e., lenses) arranged one after the other along the optical axis. The lens housing may be a lens barrel.

The housing assembly may comprise a first housing part and a second housing part configured to be attached to each other. In use, the housing assembly encloses an inner space. Said inner space or interior space of the housing assembly may be defined when the first and second housing parts are attached to each other.

The first housing part may optionally be (an integral) part of the lens assembly, or the second housing part. If the first housing part is an integral part of the lens assembly, the lens assembly comprises therefore the first housing part. In this way, the lens assembly may be directly attached to the second housing part. In simple words, the lens assembly and the first housing part may be different parts or, alternatively, may be a single part (i.e., one-single part).

The electronics carrier may be a substrate adapted for supporting or receiving electronic components. The electronics carrier comprises a first main surface and a second main surface. The first and second main surface may be opposed (e.g., parallel) to each other. They may be connected by an edge. In fact, the first and second main surfaces may be spaced apart by a thickness of the electronics carrier. The first main surface may be closer to the lens assembly that the second main surface. Further, the electronics carrier may be arranged substantially perpendicular to the optical axis.

The electronics carrier may comprise at least one printed circuit board, e.g., a first printed circuit board. Furthermore, it is possible that the electronics carrier may further comprise a second printed circuit board. If so, the first and second printed circuit boards may preferably be arranged spaced apart along the optical axis. Further, the first and second printed circuit boards may be electrically connected to each other by means of a connector that may be, for example, a board-to-board connector. In fact, the first and second printed circuit boards may be arranged opposed to each other. In this case, the second printed circuit board may comprise the above-mentioned second main surface of the electronics carrier.

The image sensor or imager is attached to the electronics carrier. In fact, the image sensor may be coupled to the first main surface of the electronics carrier. The image sensor is in optical communication with the lens assembly so as to acquire a captured image, i.e., to capture image data (i.e., video feed data). An optical alignment between the lens assembly and the image sensor is required to acquire a captured image as desired. The captured image may be a vehicle interior scene or a vehicle exterior scene. The capture image may be stored and/or processed by a processor. The processor may be part of the camera module or alternatively may be arranged out of the camera module. The capture image may be displayed in a display device. Preferably, the display device may be arranged inside the vehicle viewable by a user or driver of the vehicle.

The lens assembly and the electronics carrier may be (directly) attached to each other, preferably by a first attaching means. The first attaching means excludes fasteners. The first attaching means may be an adhesive medium such as glue or a soldering means. The attachment of the electronics carrier and the lens assembly forms a sub-assembly. It allows to avoid prior art fasteners for attaching the electronics carrier to the front housing. Manufacturing errors a thus reduced. Also, loss of optical communication between the lens assembly and the image sensor is reduced especially when PCB buckling occurs because of expansions and contractions due to temperature changes.

The lens assembly (e.g., the lens barrel) may comprise a positioning portion. The positioning portion may be adapted for attaching the lens assembly and the (first main surface of the) electronics carrier (directly) to each other. In particular, the positioning portion comprises at least one positioning element projecting radially outwardly from the optical axis. The positioning portion may comprise a plurality of legs. The positioning element serves the purpose of attaching the lens assembly and the electronics carrier to each other with a constant predetermined gap between the lens assembly and the electronics carrier and with the image sensor in optical alignment with the lens assembly. Provision of said positioning element results in a distance between the lens body and the imager being always controlled to be constant. Within the meaning of the present disclosure, a constant distance means that said distance does not change during use. However, a constant distance also involves herein slight variations that may inevitably occur in operation due to external factors such as changes in temperature resulting in small expansions. The positioning portion may be a bottom portion of the lens assembly. In this way, the image sensor may be surrounded or enclosed at least by the lens assembly and the electronics carrier. Foreign matter is advantageously prevented from coming into contact with the image sensor. Further, the optical communication is improved and the optical alignment between the lens assembly and the image sensor is enhanced. It allows to increase the resolution of the image sensor.

The lens assembly may further comprise a lens flange projecting radially outwards from the lens assembly perpendicular to the optical axis. The lens flange may be continuous or discontinuous. In fact, the lens flange may entirely surround the lens assembly or alternatively may be a projection which does not entirely surround the lens assembly. The lens flange may comprise one, two, or more segments or projections. It is possible that the lens flange and the positioning portion may be integrated into one single portion. That is, the lens flange includes the positioning portion (i.e., both are the same portion). It is worth noting that the lens flange may be entirely inside the camera module, unlike most prior art camera modules where a lens flange contacts an external surface of the housing assembly so that the lens flange is (totally) arranged outside the housing assembly.

An inner side of the housing assembly (e.g., of the first housing part) may contact:
- the first main surface of the electronics carrier, and/or
- the lens flange.

Therefore, the lens flange may be (entirely) arranged inside the housing assembly (i.e., within the inner space).

In this way, said inner side may act as a stopper of the electronics carrier and the lens assembly when both moved together into the inner space during assembling process (to be understood as including a relative movement between the sub-assembly and the housing assembly).

It provides various advantages. First, the method of manufacturing of the camera module is improved. Also, the lens assembly and its joints with other components (e.g., the attachment to the electronics carrier and the housing assembly) are better protected from external conditions or impacts. Furthermore, if the application of the camera module changes, the lens assembly has to be changed accordingly in shape and / or geometry, however, some camera module components do not need to be redesigned.

In fact, the lens assembly (i.e., the lens flange) and a surface of the housing assembly may be capable of being attached to each other. Preferably, the lens assembly (i.e., the lens flange) and an inner surface of the housing assembly, e.g., an inner surface of the first housing part, may be capable of being attached to each other. In use, the lens assembly acts as a stopper when moving the above-mentioned sub-assembly and the first/second housing parts to each other. Preferably, the first flange and the inner surface of the first housing part may abut to each other such that the first flange acts as a stopper when moving the sub-assembly into the inner space of the housing assembly.

Additionally or alternatively, the electronics carrier and the inner surface of the housing assembly (e.g., first housing part) may abut to each other such that the electronics carrier acts as a stopper when moving the sub-assembly into the inner space of the housing assembly.

The camera module may comprise a connector device. The connector device provides an electrical connection between the electronics carrier and an external electronic circuit. The connector device may comprise a first connector part and a second connector part. The second connector part may be adapted for electrically connecting to the first connector part. The first connector part may be attached or coupled to the electronics carrier, i.e., to the second surface of the electronics carrier. If the electronics carrier comprises the second printed circuit board, the first connector part may be attached or coupled to the second printed circuit board. The second housing part may comprise the second connector part. Preferably, the second connector part may be part of or attached to the second housing part. In fact, the second housing part and the second connector part may preferably form an integral part. In any case, the second housing part and the second connector part may move together at the same time. The first and second connector parts may be configured to fit each other. A secure connection may be ensured. The first connector part may be a male connector and the second connector may be a female connector. Alternatively, the first connector part may be a female connector and the second connector may be a male connector. The male connector may consist of one single pin or alternatively may comprise a plurality of pins such as six or eight pins. Different number of pins are of course possible. In any case, the female connector may comprise a receptacle that receives and holds the male connector.

The connector device comprises an alignment structure. The alignment structure may be adapted for aligning the first and second connector parts. The structure alignment may include a tapered structure or tapered portion. In fact, the tapered structure may have a taper shape according to an insertion direction.

It is preferred that the first connector part and/or the second connector part may comprise an alignment structure that includes a taper shape adapted for aligning the first and second connector parts to each other. The connection of the second housing part to the first housing part includes an alignment of the second housing part with respect to the first housing part. That is, the first and second housing parts may be aligned to each other due to the connection between the first and second connector parts. As the male connector is inserted into the female connector, the first and second housing parts become aligned with each other. In addition, the first and second connector parts may be aligned to each other when the first and second housing parts are mounted.

Preferably, the female part or the male part may comprise an inclined surface with respect to the longitudinal axis. More preferably, the female part (and/or the one or more pins) may comprise the tapered structure or tapered portion. It means that the first and/or the second connector part may be provided with a taper shape comprising the inclined surface, and wherein the one or more pins and/or an aperture to receive the one or more pins has/have a shape that narrow(s) at one end. It helps the insertion of:
- a portion of the second connector part into the first connector part, or
- a portion of the first connector part into the second connector part.

The female part may be a floating connector or a non-floating connector. It is preferred that the first connector part is non-floating. If so, the first connector part moves together (i.e., in tandem) with the electronics carrier and the lens assembly at the same time when the second connect part is moved (explained further below). Preferably, the second connector part may be a floating connector or a non-floating. If the second connector part is a floating connector, then it is a female connector where the receptacle is part of or fixed to the second housing part. The floating connector may be provided with a floating structure that allows floating (i.e., moving perpendicular to electronics carrier) by providing a floating spring. Thus, the floating connector may be adapted for individual flex to accommodate for misalignment of respective ones of said pins when said first mating portion of said front housing member and said second mating portion of said second housing member are mated together. In fact, the floating connector may be configured to flex in a direction generally transverse to a longitudinal axis of said pins.

It is preferred that the first housing part comprises a first contact portion and the second housing part comprises a second contact portion. The first contact portion at least partially overlaps the second contact portion in a direction perpendicular to the optical axis. It allows the first housing part and the second housing part to be forced into alignment with each other when the first and second contact portions abut each other. Said alignment comprises a movement of the first and/or second part in a direction perpendicular to the optical axis. In fact, the first and second portions are pre-centering structures or match structures for fitting the first and second housing parts as required. Said pre-centering structures or match structures may comprise a wedge-shaped structure.

The sub-assembly (i.e., at least the lens assembly and the electronics carrier) may be moved by the connector device in a direction perpendicular to the optical axis. Preferably, it occurs prior to or during abutment of the first and second housing parts. It may occur after the first attaching means is provided, particularly, prior to provide a third attaching means (explained further below).

In fact, the abutment between the first housing part and the second housing part may cause a movement of the lens assembly and the electronics carrier in a direction perpendicular to the optical axis when the first and second housing parts are mounted to each other.

More specifically, in the assembly process of the camera module, the first housing part and/or the second housing part may approach each other. When the first and second contact portion enter into contact (e.g., when the first housing part is attached to the second housing part), the second housing part move along a direction perpendicular to the optical axis. The movement of the second housing part along a direction perpendicular to the optical axis may cause a displacement of the first connector part in the same direction as the movement of the second housing part that, in turn, causes a displacement of a sub-assembly formed by at least the lens assembly and the electronics carrier in the same direction as the first connector part.

In other words, the alignment of the first and second housing parts may include a movement of the second housing part in a direction perpendicular to the optical axis that is transferred to the second connector part that, in turn, is transferred to the first connector part that, in turn, is transferred to the electronics carrier that, in turn, is transferred to the lens assembly such that both the electronics carrier and the lens assembly are moved together (at the same time) in a direction perpendicular to the optical axis.

As explained, the abutment between the first housing part and the second housing part causes a movement of the above-mentioned sub-assembly (i.e., the lens assembly and the electronics carrier) in a direction perpendicular to the optical axis. For this, the first and second contact portions abut each other. Not only this, but the first and second contact portions also force the first housing part and the second housing part to be aligned to each other. It occurs in an instant of time where the lens assembly and the electronics carrier are attached to each other (i.e., the above-mentioned sub-assembly is already formed) and there exist a gap between the sub-assembly (e.g., the electronics carrier and/or the lens assembly) and an inner surface of a lateral side of the housing assembly in a direction perpendicular to the optical axis. The gap is important to allow the sub-assembly to (freely) move in a direction perpendicular to the optical axis. In this particular instant of time, the sub-assembly is not yet (permanently) attached to the housing assembly.

As a result, when the first and second housing parts approach each other along the optical axis, then the first and second contact portions abut each other causing the required alignment of the first and second housing parts in both directions perpendicular to the optical axis, wherein the first and second connector parts are forced to be aligned, wherein the first connector part moves the electronics carrier and the lens assembly in both directions perpendicular to the optical axis. It is possible due to the gap. In this way, the housing assembly, the connector device, the electronics carrier, and the lens assembly are aligned (provisionally) in a direction perpendicular to the optical axis without any fastener, screw, bolt, pin, or stud. A permanent (i.e., operational or non-provisional) alignment may be achieved by attaching the lens assembly and the housing assembly to each other by providing the third attaching means afterwards the provisional alignment is provided. Alternatively, the electronics carrier may be tightly clamped as explained further below. Also, a second attaching means may be provided after the provisional alignment. That is, the provisional alignment occurs before providing the second and the third attaching means.

The second attaching means may be a welding means. Other types such as an adhesive medium may be absolutely possible. The second attachment means may be adapted for attaching the first and second housing parts. Preferably, the second attaching means at least partially surrounds the first and/or second housing parts. More preferably, at least (the outer surface of) the lateral sides of the first and second housing parts.

Preferably, the first housing part may comprise a first overlap portion, wherein the second housing part may comprise a second overlap portion which overlaps the first overlap portion in a direction perpendicular to the optical axis. An attachment of the first housing part and the second housing part may be performed at the first and second overlap portions by the second attaching means.

It is preferred that the first housing part comprises a lateral portion that includes the first overlap portion, and wherein the second housing part comprises a side portion that includes the second overlap portion.

The second attaching means may be provided after the (provisional) alignment of the first and second housing parts has occurred as well as the (provisional) alignment of the first and second connector parts has been performed. Therefore, the (permanent) attachment of the first and second housing parts is obtained after the position of the sub-assembly has been adjusted by the connector device.

The third attaching means may be an adhesive medium or soldering means. The third attaching means may be adapted for attaching the lens assembly and the housing assembly to each other. Preferably, the third attaching means may be adapted for attaching the lens flange and (an inner surface of) the first housing part. The inner surface may be a surface of the housing assembly that, in operation, is not an exterior surface. The exterior surface may directly contact the exterior environment of the camera module. The third adhesive means may also be adapted for acting as a sealing means, i.e., preventing matter from the outside of the camera module from passing through between the lens assembly and the housing assembly into the interior of the camera module. The third attaching means may be arranged between the lens flange and the outer or the inner surface of the housing flange of the first housing part. It is preferred that the third attaching means surrounds the lens assembly. The third attaching means may be cured. In use, once the third attaching means is cured and the lens assembly and the electronics carrier are adhered, e.g., glued, together, the optical communication is established between the lens assembly and the image sensor.

The third attaching means may be provided after the (provisional) alignment of the first and second housing parts has occurred as well as the (provisional) alignment of the first and second connector parts has been performed. Therefore, the (permanent) attachment of the lens assembly and the housing assembly is obtained after the position of the sub-assembly has been adjusted by the connector device.

The electronics carrier may optionally be arranged tightly sandwiched by a first clamping portion and a second clamping portion. The first clamping portion may provide a contact pressure applied to the first main surface of the electronics carrier. Also, the second clamping portion may provide a contact pressure applied to the second main surface of the electronics carrier. The first clamping portion may be part of or attached to the first housing part or the lens assembly. Further, the second clamping portion may be part of or attached to the second housing part or the connector device. Indeed, the electronics carrier may be tightly sandwiched in the inner space. In use, a (clamping) force when attaching the first housing part and the second housing part may be generated and applied to the electronics carriers resulting in the electronics carrier being sandwiched under pressure. It serves the purpose of fixing the electronics carrier without fasteners. In other words, the electronics carrier may be fixed in place as required solely by the clamping pressure exerted by the first and second portions. It is worth noting that said clamping pressure makes it possible to ensure the optical communication between the lens assembly and the image sensor. The contact pressure may provide a force component substantially perpendicular to the first or second surfaces of the electronics carrier. In use, the first and second housing parts may be configured to be attached to each other, being the electronics carrier with an interference fit. For this purpose, the electronics carrier interference fit is adapted to keep the electronics carrier tightly clamped in the direction parallel to the optical axis, or perpendicular to the first and second surfaces of the electronics carrier. Further, the first and/or the second contact portion may comprise thermal and/or electrical conductors. It helps reduce the electromagnetic influence (EMI) of the electronics device and increase the heat dissipation of the electronics carrier.

The housing assembly may comprise electrically conductive material. At least one of the first housing part and the second housing part may be electrically connected to the electronics carrier, preferably, both housing parts. It is preferred that the first and second housing parts are electrically connected to each other.

The electronics carrier may comprise a first electrically conductive portion on its first surface. Further, the first housing part (or the lens assembly) may contact at least the first electrically conductive portion. In particular, the above-mentioned first clamping portion presses the first electrically conductive portion. In use, the first housing part and the second housing part may be electrically connected to the electronics carrier. The first electrically conductive portion may be formed adjacent an edge of the electronics carrier. More preferred, the first and second conductive portions may be made of copper, tin, silver, gold, or a combination thereof and optionally may be of the order of 0.8 mm wide.

With the particular configuration described herein, the lateral walls of the housing assembly (i.e., the lateral wall of the first housing part and the side wall of the second housing part) are reduced in thickness. An extremely lightweight camera module is achieved whose complexity and costs are advantageously reduced. An important technical effect is that dissipation of heat generated by the electronic parts fitted within the housing assembly is highly improved. Furthermore, electromagnetism properties (EMCs) are also enhanced, particularly, when the first and housing parts are made of electrically conductive material, for example, metal such as aluminum or Zamak. Specially, when the electronics carrier is electrically connected to the first housing part and/or the second housing part, being the first and second housing parts electrically connected to each other. According to preferred examples, the first and second housing parts form an enclosure that acts as a Faraday Cage.

The housing assembly is not an overmolded component. That is, the housing assembly is a solid part that during the assembling process may be fixed or moved as required. The first and second housing parts may preferably be made by impact extrusion.

The present invention is advantageous in the manufacturing process since no fasteners are employed for fixing the electronics carrier. Tolerances, costs and time are consequently reduced. In addition, interference fit of the electronics carrier results in that the electronics carrier and one or more of the first housing part and the second housing part can be arranged with direct contact with each other when in use. This greatly improves heat dissipation without increasing costs to the extent that the housing assembly is capable of suitably withstanding the heat generated by electronics components received within the housing assembly.

According to an aspect of the present invention, a method for assembling a camera module is also disclosed herein. The method may comprise:
- providing an electronics carrier which supports an image sensor (on a first main surface thereof);
- providing a housing assembly, preferably comprising a first housing part and a second housing part, optionally, the first housing part is a different part from the second housing part or, alternatively, an integral part of a lens assembly;
- providing a connector device for electrically connecting the electronics carrier to an external electronic circuit, wherein the connector device comprises a first connector part and a second connector part, and preferably the second connector part is an integral part of or attached to the second housing part;
- coupling the first connector part to (a second main surface of) the electronics carrier;
- attaching the electronics carrier and a lens assembly to each other forming a sub-assembly, preferably, by a first attaching means;
- preferably, providing the sub-assembly in a position where the lens assembly points downwards, i.e., to the ground, for example, moving the sub-assembly from top to bottom such that (an inner surface of) the housing assembly (e.g., the first housing part) acts as stopper;
- mounting the housing assembly, preferably, by moving (i.e., approaching) the first housing part and a second housing part to each other;
- preferably, aligning the first connector part and the second connector part with each other;
- preferably, aligning the first housing part and the second housing part in a direction perpendicular to an optical axis, optionally when a first contact portion and a second contact portion abut each other, said first and second contact portions being part of the first and second housing parts respectively. In fact, an alignment of the first and second housing parts contributes or causes an alignment of the first and second connector parts;
- connecting the first connector part and the second connector part to each other;
- preferably, moving the sub-assembly in a direction perpendicular to the optical axis. That is, the alignment of the first and second connector parts causes a movement of the sub-assembly in a direction perpendicular to the optical axis;
- preferably, providing a second attaching means (e.g., welding means) for attaching the first and second housing parts;
- preferably, turning around the sub-assembly and the first housing part (i.e., the lens assembly points upwards);
- preferably, providing a suction force to the lens assembly in an upward direction;
- abutting the inner surface of the housing assembly against
   - the first main surface of the electronics carrier, and/or
   - at least one flange of the lens assembly that extends radially outwards to the optical axis;
   - preferably, providing a third attaching means (e.g., adhesive means) at least therebetween the lens assembly and the housing assembly (e.g., the first housing part); and
   - preferably, curing the third attaching means.

All or at least some of the above-mentioned steps may be provided in the specific cited order. The described method may be a manufacturing process of the above-mentioned camera module.

### BRIEF DESCRIPTION OF THE DRAWINGS

Non-limiting examples of the present camera module will be described in the following, with reference to the appended drawings.

In the drawings:
Figure 1 is a cross-sectional view of a sub-assembly formed by the lens assembly, the electronics carrier, an image sensor coupled to the electronics carrier, and the first connector part;
Figure 2A is a cross-sectional view of a sub-assembly and a front housing, wherein the lens assembly is pointing downwards, and wherein an inner side of the front housing abuts the electronics carrier and/or a lens flange of the lens assembly;
Figure 2B is a cross-sectional view of a cross-sectional view of the sub-assembly and the front housing shown in figure 2, wherein figure 2B further shows a cross-sectional view of a back housing provided with a second connector part;
Figure 2C is a cross-sectional view of an example of figure 2B where the first and second connector parts are slightly misaligned when approaching the front and back housing to each other;
Figure 3 is a cross-sectional view once the front housing and the back housing are in direct contact with each other, wherein the sub-assembly is arranged in place as required, the lens assembly is pointing downwards, and the third attaching means has not yet been provided;
Figure 4 is an enlarged fragmentary cross-sectional view of the vehicle camera module shown in figure 3;
Figure 5 is a cross-sectional view of the example of figure 4 after being turned around so that the lens assembly is pointing upwards;
Figure 6 is a cross-sectional view of the example of figure 5, wherein the third attaching means is provided therebetween the lens assembly and the front housing;
Figure 7 is an enlarged fragmentary cross-sectional view of the first and second connector parts connected to each other;
Figure 8 is an enlarged fragmentary cross-sectional view of the electronics carrier being attached to the lens assembly by a first attaching means, wherein the lens assembly is attached to the inner side of the front housing by the third attaching means, and wherein the inner side of the front housing abuts the electronics carrier and/or a lens flange of the lens assembly;
Figure 9 is an enlarged fragmentary cross-sectional view of a first and second contact portions of the front and back housing respectively, the first and second contact portions comprising a wedge-shaped structure to aligned the front and back housing with each other;
Figure 10 is a perspective view of an example of the camera module;
Figure 11 is an exploded view of an example of the camera module;
Figure 12 is a perspective view of the sub-assembly of figure 1;
Figure 13 is a top-view of the electronics carrier;
Figure 14 is a cross-sectional view showing the inner side of the housing assembly contacting the first main surface of the electronics carrier; and
Figure 15 is a schematic illustration that illustrates a cross-sectional view of an example of the camera module.

### DETAILED DESCRIPTION OF EXAMPLES

With reference to the non-limiting examples shown in the figures of the drawings, a camera module for a vehicle is described herein as well as a method for assembling thereof.

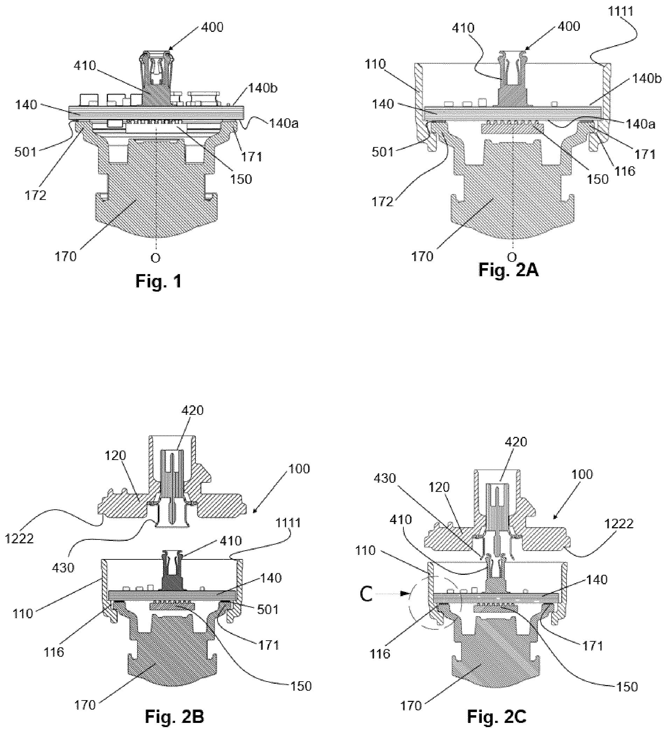

Figure 1 shows that the electronics carrier 140 is adapted for receiving electronic components. As shown, the electronics carrier 140 is a printed circuit board. Alternatively, the electronics carrier 140 may comprise two or more printed circuit boards (not shown) connected by a boar-to-board connector (not shown). In any case, the electronics carrier 140 comprises a first main surface 140a and a second main surface 140b. Both the first and second main surfaces 140a, 140b are arranged parallel to each other. The first main surface 140a is arranged closer to the lens assembly 170 than the second main surface 140b. If only one single (planar) printed circuit board is provided, the first and second main surface 140a, 140b are spaced apart by a thickness of the printed circuit board. If two or more (planar) printed circuit boards are provided, they may be arranged parallel to each other, wherein the first printed circuit board comprises the first main surface 140a, and the second printed circuit board comprises the second main surface 140b (not shown).

As shown in figure 1, the image sensor 150 or imager is attached to the first main surface 140a of the electronics carrier 140.

Furthermore, figure 1 shows a lens assembly 170 and an electronics carrier 140 directly attached to each other. In use, the lens assembly 170 and the electronics carrier 140 form a sub-assembly. In this way, the lens assembly 170 and the electronics carrier 140 may be moved together and at the same time as explained further below. The lens assembly 170 and the electronics carrier 140 are attached to each other by a first attaching means 501. The first attaching means 501 is an adhesive medium such as a glue. Alternatively, the first attaching means 501 may be a soldering means (not shown). The first attaching means 501 may have a thickness of up to 1 millimeter. For example, when the first attaching means 501 is an adhesive medium the thickness may be between 0.1 and 0.8 millimeter. It allows to improve control of a relative position between the imager 150 and the lens assembly 170 as (at least a portion of) the adhesive medium may be squeezed before being cured. The lens assembly 170 is adjustable aligned with the electronics carrier 140 in five or six axes.

The lens assembly 170 and the image sensor 150 are in optical communication. Since the image sensor 150 is optically aligned to the lens assembly 170 as required, the image sensor 150 is capable of converting electromagnetic radiation, i.e., light, from the exterior of the camera module into image data. In use, image data may be saved and/or displayed. The camera module may be thus configured to acquire a capture image, e.g., a plurality of captured images or video feed. The frame rate of the camera module is at least fifteen frames per second (15 fps), for example, 30 fps or more. The camera module is part of or electrically connected to a vehicle visual system. The vehicle visual system is an ADAS system (advanced driver assistance system). The captured image may be processed by a processor unit arranged inside or outside the camera module. The (processed) captured image may be displayed by a display device instantaneously (i.e., with a very little delay from acquired to displayed).

As shown, the lens assembly 170 comprises a positioning portion 171. The positioning portion 171 is adapted for attaching the lens assembly 170 and the first main surface 140a of the electronics carrier 140 directly to each other by the first attaching means 501. In particular, the first attaching 501 is arranged therebetween the positioning portion 171 and the first main surface 140a. The positioning portion 171 is arranged a bottom portion of the lens assembly 170. In this way, the image sensor 150 is surrounded or enclosed at least by the lens assembly 170 and the electronics carrier 140. Foreign matter is advantageously prevented from coming into contact with the image sensor 150. Further, optical alignment between the lens assembly 170 and the image sensor 150 is enhanced. It allows to increase the resolution of the image sensor, i.e., an image sensor 150 with a greater number of megapixels. For example, equal to or greater than three megapixels (3 mpx). It also reduces the bending effect of the electronics carrier due to temperature changes.

Figure 1 further shows that the lens assembly 170 comprises a lens flange 172. The lens flange 172 projects radially outwards from the lens assembly 171 perpendicular to the optical axis O. In examples, the lens flange 172 is continuous such that it entirely surrounds the lens assembly 170. Alternatively, it is absolutely possible that the lens flange 172 is discontinuous. For example, the lens flange 172 may be a projection which does not entirely surround the lens assembly 170. The lens flange 172 may be two or more segments angularly (and equidistantly) displaced around the optical axis O. Similarly, the positioning portion 171 may comprise two or more legs angularly (and equidistantly) displaced around the optical axis O. In the shown example, the lens flange 172 integrates the positioning portion 171. That is, one side of the lens flange 172 is attached to the electronics carrier 140 and another (opposite / parallel) side is attached to an inner side 116 of the first housing part 110 (as explained further below). Alternatively, it may be possible that the positioning portion 171 and the lens flange 172 are spaced apart along the optical axis O (not shown).

As shown, the camera module comprises a connector device 400. The connector device 400 comprises a first connector part 410 and a second connector part 420. The first and second connector parts 410, 420 are adapted for being connected to each other. The first connector part 410 is directly attached to the second main surface 140b of the electronics carrier 140. Therefore, the above-mentioned sub-assembly further comprises the first connector part 410. The connector device 400 is a floating connector device or a non-floating connector device. In particular, the first connector part 410 shown in the figures is non-floating. It means that the electronics carrier 140 is moved together with the first the connector part 410.

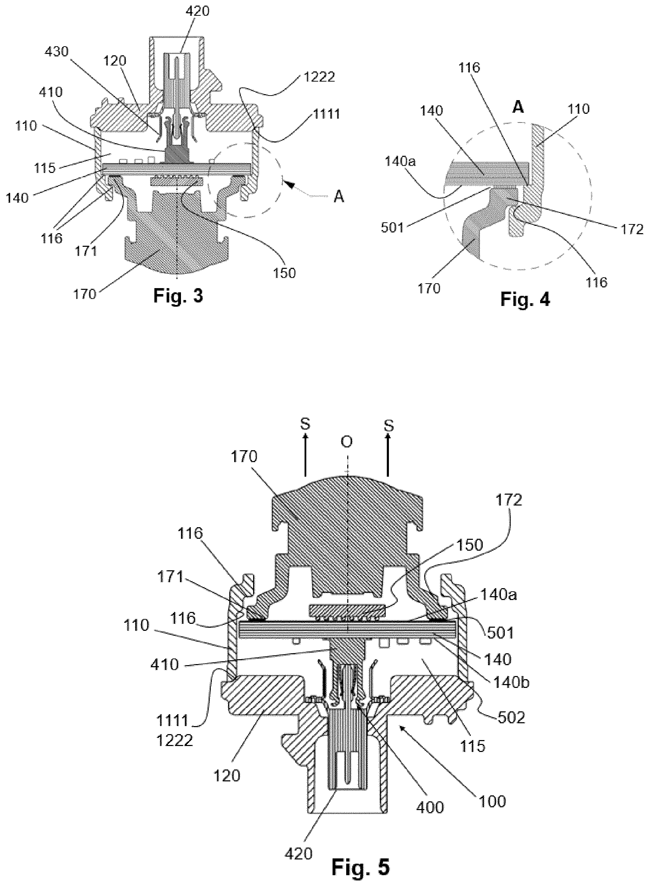

Figures 2B and 2C show a (camera) housing assembly 100. In operation, the housing assembly 100 may define an inner space 115 (see figure 5 for the reference sign 115). Particularly, the housing assembly 100 encloses the electronics carrier 140 and at least partially encloses a portion of the lens assembly 170 and the first connector part 410. In particular, the housing assembly 100 comprises a first housing part 110 and a second housing part 120. The first and second housing parts 110, 120 are adapted for being attached to each other. The first and second housing parts 110, 120 are produced by impact extrusion and made of electrically conductive material such as metal, for example, aluminum or Zamak. The first housing part 110 is a front housing, wherein the second housing part 120 is a back housing. The lens assembly 170 may include the first housing part (not shown), i.e., the lens assembly 170 may be an integrated lens assembly 170 wherein a lens barrel is adapted for being attached to a housing part, e.g., the second housing part 120. In this example not shown, the integrated lens and the second housing part 120 may define the inner space 115 and may enclose the electronics carrier 140 (not shown).

As shown, the housing assembly 100 comprises the inner side 116. The inner side 116 faces the inner space 115. In contrast, an external surface faces the exterior environment of the camera module. In particular, the first housing part 110 comprises the inner side 116.

Figure 4 is a detail view that shows that the inner side 116 contacts at least one of the first main surface 140a of the electronics carrier 140 and the lens flange 172. In use, the inner side 116 acts as a stopper of the sub-assembly when moved into the inner space 115 during assembling process of the camera module. In other words, the inner side 116 of the first housing part is configured to stop the electronics carrier 140 and the lens assembly 170 when both are moved together into the inner space 115 during the camera assembling process or when there exist a relative movement of the sub-assembly and the housing assembly 100. In particular, the example of figure 4 shows that the first main surface 140a directly contacts the inner side 116. There may exist a small gap therebetween the lens flange 172 and the inner side 116. According to an example not shown, the lens flange 172 directly contacts the inner side 116. If so, there may exist a small gap therebetween the first main surface 140a and the inner side 116 (not shown). In any case, the positioning portion 171 and the lens flange 172 are arranged in the inner space 115. The inner space 115 does not contain (solid) molded material.

As shown in figures 2A, 2B and 2C, the lens assembly 170 points to the ground. That is, the sub-assembly is provided in a position where the lens assembly 170 points downwards. In particular, the first housing part 110 is provided in such position where the sub-assembly is moved from top to bottom until it contacts the inner side 116. In simple words, the electronics carrier 140 and the lens assembly 170 are both moved together at the same time in a direction along the optical axis O until the inner side 116 of the first housing part 110 abuts the lens flange 172 and/or the first main surface 140a of the electronics carrier 140, for example, at or near the perimeter edge of the electronics carrier 140.

Figure 2B shows the second housing part 120 comprises the second connector part 420. In other words, the second connector part 420 is an integral part of or attached to the second housing part 120.

Figure 2C further shows that the first housing part 110 and the second housing part 120 are moved to each other. For example, the second housing part 120 is moved from top to bottom. As shown, the first and second connector parts 410, 420 are disadvantageously not totally aligned with each other.

In examples, the first connector part 410 is a female connector part and the second connector part 420 is a male connector part. Alternatively, according to an example not shown, the first connector part 410 may be a male connector part and the second connector part 420 may be a female connector part. The second connector part 420 comprises one single pin wherein the first connector part 410 comprises a receptacle for receiving the first connector part 410. According to an example not shown, the male connector part may comprise a plurality of pins such as eight pins.

The first connector part 410 and/or the second connector part 420 comprises an alignment structure. In the shown example is the second connector part 420 that comprises the alignment structure. The alignment structure includes a taper shape 430 adapted for aligning the first and second connector parts 410, 420 to each other. In the shown example, the second connector part 420 comprises the taper shape 430. In this way, the first and second connector parts 410, 420 are aligned with each other as the first and second housing parts 110, 120 approach each other.

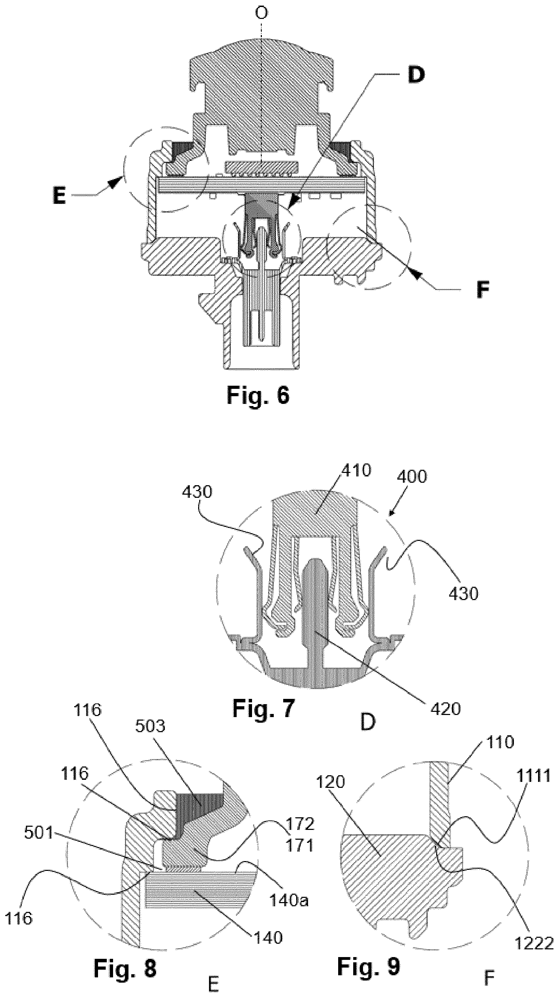

In particular, as shown in figure 7, the taper shape 430 facilitates the insertion of the male connector into the female connector. The taper shape 430 has an opening at the free end of the second connector part 420 that gradually narrows away from the free end. In other words, the alignment structure comprises a projection arranged at or near the free end of the second connector part 420 extending radially outward from a longitudinal axis of the pin. As shown, a portion of the first connector part 410 (e.g., the receptacle thereof) is arranged therebetween the pin and the alignment structure. Also, a portion of the first connector part 410 is arranged within lateral walls (e.g., the taper portion 430) of the second connector part 420.

Figure 3 shows the first and second housing parts 110, 120 come into direct contact to each other. The inner space 115 is defined therein.

The first housing part 110 comprises a first contact portion 1111 and the second housing part 120 comprises a second contact portion 1222. The first contact portion 1111 at least partially overlaps the second contact portion 1222 in a direction perpendicular to the optical axis O. In use, the first and second contact portions 1111, 1222 abut each other so as to cause the first and the second housing parts 110, 120 to be aligned with each other. For example, figure 9 shows that both the first and second contact portions 1111, 1222 comprise a match structure for fitting the first and second housing parts 110, 120 as required. In particular, the first and second contact portions 1111, 1222 are a wedge-shaped structure. Other types of structures may be of course provided such as a slot or a groove. A purpose of the first and second contact portions 1111, 1222 is to ensure alignment of the first and second housing parts 110, 120 in a direction perpendicular to the optical axis O produced when the first and second housing parts 110, 120 abut each other.

During the assembling process, the abutment between the first housing part 110 and the second housing part 120 causes a movement of the sub-assembly in a first direction perpendicular to the optical axis O and also in a second direction being perpendicular to said first direction and the optical axis O. That is, the lens assembly 170 and the electronics carrier 140 are moved by the connector device 400 in the first and the second direction.

In particular, when the first housing part 110 is attached to the second housing part 120, a movement of the second housing part 120 along a direction perpendicular to the optical axis O causes a displacement of the second connector part 420 in the same direction as the movement of the second housing part 120. In turn, the second connector part 410 causes a displacement of the first connector part 410. In turn, the first connector part 410 causes a displacement of a sub-assembly formed by at least the lens assembly 170 and the electronics carrier 140 in the same direction as the first connector part 410.

In other words, the alignment of the first and second housing parts 110, 120 includes a movement of the second housing part 120 in a direction perpendicular to the optical axis O that is transferred to the second connector part 420 that, in turn, is transferred to the first connector part 410 that, in turn, is transferred to the electronics carrier 140 that, in turn, is transferred to the lens assembly 170 such that both the electronics carrier 140 and the lens assembly 170 are moved in a direction perpendicular to the optical axis O.

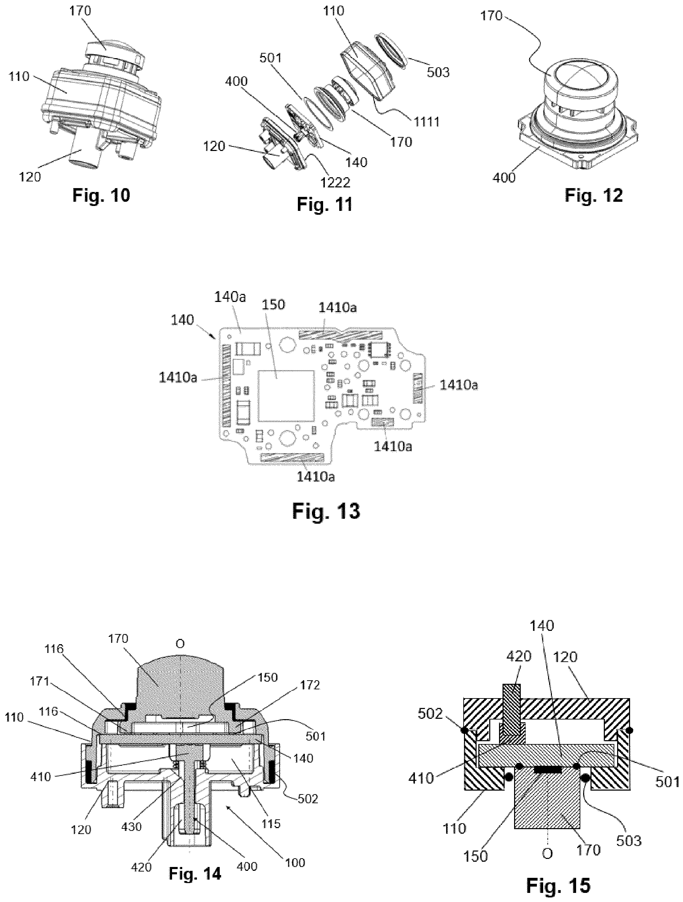

When the lens assembly 170 is still pointing to the ground, the second attaching means 502 is provided (see figure 15). The second attaching means 502 allows the first housing part 110 and the second housing part 120 being attached to each other. The second attaching means 502 comprises welding means or an adhesive medium such as glue. The second attaching means 502 is arranged on the exterior surface of the first and second housing parts 110, 120 and/or therebetween the first and second housing parts 110, 120. In particular, the second attaching means 502 at least partially surrounds the first and/or second housing parts 110, 120.

Figure 5 shows that the camera module is turned around so that the lens assembly 170 points upwards. It is possible that the inner side 116 may unfortunately lose direct contact with the first main surface 140a and/or the lens flange 172. In other words, the sub-assembly moves slightly downward due to gravity.

A suction force S is provided to the lens assembly 170 in an upward direction such that, in use, the inner side 116 (again) abuts the first main surface 140a of the electronics carrier and/or the lens flange 172 (see figure 6). The suction force S thus ensures the inner side 116 is in direct contact with the first main surface 140a of the electronics carrier and/or the lens flange 172.

Figures 6, 8, and 15 show that a third attaching means 503 is provided at least therebetween the lens assembly 170 and the first housing part 110. The lens assembly 170 and the first housing part 110 are attached to each other as required when the lens assembly 170 points upwards and the inner side 116 directly contacts with the first main surface 140a and/or the lens flange 172. The third attaching means 503 comprises soldering means or an adhesive medium such as glue. The fact that the lens assembly 170 points upwards facilitates the step of providing the third attaching means 503 particularly when is adhesive medium.

Additionally or alternatively to the third attaching means 503, the electronics carrier 140 is arranged tightly sandwiched by a first clamping portion and a second clamping portion,
- the first clamping portion being at least one of the first housing part 110 and the lens assembly 170 and;
- the second clamping portion being at least one of the second housing part 120 and the connector device 400.

Figure 14 shows that the electronics carrier 140 is tightly sandwiched by the first clamping portion and the second clamping portion. The first clamping portion is the inner side 116 of the first housing part 110. The second clamping portion is the second housing part 120, particularly, the side walls thereof. As shown, the lateral walls of the first housing part 110 overlap the side walls of the second housing part 120 in a direction perpendicular to the optical axis O. In this non-limiting example, the first and second housing are attached by each other by an interference fit. Said interference fit extends along an interface surface (I) defined by the first and lateral and side walls of the first and second housing parts 110, 120 when in contact.

In the shown example of figure 14, the first connector part 410 is a male connector part, whereas the second connector part 420 is a female connector part. In the example, the second housing part 120 includes the alignment structure that comprises the taper shape 430 adapted for aligning the first and second connector parts 410, 420 to each other.

Figure 13 shows the first main surface 140 of the electronics carrier 140 comprising the image sensor 150 and an electrically conductive portion 1410a that is in electrical connection to electronic components. The electrically conductive portion 1410a is in direct contact to the inner side 116 of the housing assembly 100. Electromagnetic noise (EMCs) is advantageously reduced and heat dissipation is improved.

Figure 15 illustrates that the electronics carrier 140 is fixed in place as required without fasteners or screws passing through thereof. As illustrated, the inner side 116 of the housing assembly 100 directly contacts the electronics carrier 140. The first attaching means 501 is adapted for attaching the lens assembly 170 to the electronics carrier 140. The second attaching means 501 is adapted for attaching the front housing 110 and the back housing 120. In doing so, and with the contribution of the alignment structure (not illustrated), the connector 400 causes the movement of the sub-assembly formed by the lens assembly 170 and the electronics carrier 140 during the assembling process. The third attaching means 503 is provided therebetween a portion of the front housing 110 and the electronics carrier 140. Once the third attaching means 503 is cured, the camera module is ready to be placed into a bodywork of a motor vehicle (not shown), for example, pointing downwards as in figure 15.

Although only a number of examples of the present electronic device and assembly method thereof have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. Reference signs related to drawings placed in parentheses in a claim are solely for attempting to increase the intelligibility of the claim, and shall not be construed as limiting the scope of the claim.

## Claims

1. A camera module for vehicles comprising:
- a housing assembly (100);
- an electronics carrier (140) received within an inner space (115) of the housing assembly (100);
- an image sensor (150) coupled to a first main surface (140a) of the electronics carrier (140);
- a lens assembly (170) defining an optical axis (O) and being in optical communication with the image sensor (150) so as to acquire a captured image,
wherein the lens assembly (170) and the electronics carrier (140) are attached to each other, and
wherein an inner side (116) of the housing assembly (100) contacts
- the first main surface (140a) of the electronics carrier (140), and/or
- a lens flange (172), wherein the lens assembly (170) comprises the lens flange (172) that projects radially outwards from the lens assembly (170).

2. The camera module of claim 1, wherein the inner side (116) of the housing assembly (100) acts as a stopper of the electronics carrier (140) and the lens assembly (170) when both moved together into the inner space (115) during assembling process.

3. The camera module of claims 1-2, wherein it further comprises a connector device (400) that includes a first connector part (410) and a second connector part (420), wherein the first and second connector parts (410, 420) are adapted for being connected to each other, and wherein the first connector part (410) is coupled to the electronics carrier (140) and the second connector part (420) is part of or attached to the housing assembly (100).

4. The camera module of claim 3, wherein the first connector part (410) and/or the second connector part (420) comprises an alignment structure that includes a taper shape adapted for aligning the first and second connector parts (410, 420) to each other.

5. The camera module of any preceding claim, wherein the housing assembly (100) comprises a first housing part (110) and a second housing part (120) configured to be attached to each other, in use, defining the inner space (115).

6. The camera module of claim 5, wherein the first housing part (110) comprises a first contact portion (1111) and the second housing part (120) comprises a second contact portion (1222), wherein the first contact portion (1111) at least partially overlaps the second contact portion (1222) in a direction perpendicular to the optical axis (O) such that the first and second contact portions (1111, 1222) are abutting each other so as to force the first housing part and the second housing part (110, 120) to be aligned to each other.

7. The camera module of claims 5-6, wherein the abutment between the first housing part (110) and the second housing part (120) causes a movement of the lens assembly (170) and the electronics carrier (140) in a direction perpendicular to the optical axis (O).

8. The camera module of any preceding claim, wherein the lens assembly (170) and the electronics carrier (140) are attached to each other by a first attaching means (501), optionally, the first attaching means (501) comprises an adhesive medium or soldering means.

9. The camera module of claim 5, wherein the first housing part (110) and the second housing part (120) are capable of being attached to each other by a second attaching means (502), wherein the second attaching means (502) comprises welding means or an adhesive medium such as glue, preferably, the second attaching means (502) is provided after the first attaching means (501) has been provided.

10. The camera module of any preceding claim, wherein the lens assembly (170) and the housing assembly (100) are attached to each other by a third attaching means (503), wherein the third attaching means (503) comprises soldering means or an adhesive medium such as glue, preferably, the third attaching means (503) is provided after the first attaching means (501) has been provided.

11. The camera module of claims 3-10, wherein the lens assembly (170) and the electronics carrier (140) are moved by the connector device (400) in a direction perpendicular to the optical axis (O), preferably, prior to or during abutment of the first and second housing parts (110, 120), optionally, after the first attaching means (501) is provided, particularly, prior to provide the third attaching means (503).

12. The camera module of claims 5-11, wherein when the first housing part (110) is attached to the second housing part (120), a movement of the second housing part (120) along a direction perpendicular to the optical axis (O) causes a displacement of the first connector part (410) in the same direction as the movement of the second housing part (120) that, in turn, causes a displacement of a sub-assembly formed by at least the lens assembly (170) and the electronics carrier (140) in the same direction as the first connector part (410).

13. The camera module of claims 5-12, wherein alignment of the first and second housing parts (110, 120) includes a movement of the second housing part (120) in a direction perpendicular to the optical axis (O) that is transferred to the second connector part (420) that, in turn, is transferred to the first connector part (410) that, in turn, is transferred to the electronics carrier (140) that, in turn, is transferred to the lens assembly (170) such that both the electronics carrier (140) and the lens assembly (170) are moved together in a direction perpendicular to the optical axis (O).

14. The camera module of claims 5-13, wherein the electronics carrier (140) is arranged tightly sandwiched by a first clamping portion and a second clamping portion:
(i) the first clamping portion being at least one of the first housing part (110) and the lens assembly (170);
(ii) the second clamping portion being at least one of the second housing part (120) and the connector device (400).

15. A method for assembling a camera module comprising:
- providing an electronics carrier (140) which supports an image sensor (150) on a first main surface (140a) thereof;
- providing a housing assembly (100), preferably the housing assembly comprises a first housing part (110) and a second housing part (120);
- providing a connector device (400) for electrically connecting the electronics carrier (140) to an external electronic circuit, wherein the connector device (400) comprises a first connector part (410) and a second connector part (420);
- providing a first attaching means (501) for attaching the first main surface (140a) of the electronics carrier and a lens assembly (170) to each other forming a sub-assembly;
- coupling the first connector part (410) to a second main surface (140b) of the electronics carrier;
- preferably, providing the sub-assembly in a position where the lens assembly (170) points downwards;
- preferably, moving the first housing part (110) and a second housing part (120) to each other;
- preferably, aligning the first connector part (410) and the second connector part (420) with each other;
- preferably, aligning the first housing part (110) and the second housing part (120) in a direction perpendicular to an optical axis (O);
- connecting the first connector part (410) and the second connector part (420) to each other;
- preferably, moving, by the first connector part (410), the sub-assembly in a direction perpendicular to the optical axis (O);
- preferably, providing a second attaching means (502) for attaching the first and second housing parts (110, 120);
- preferably, turning around the sub-assembly and the housing assembly (100) so that the lens assembly (170) points upwards;
- preferably, providing a suction force to the lens assembly (170) in an upward direction;
- abutting an inner side (116) of the housing assembly against
- the first main surface (140a) of the electronics carrier, and/or
- at least one lens flange (172) of the lens assembly that extends radially outwards to the optical axis (O); and
- preferably, providing a third attaching means (503) at least therebetween the lens assembly (170) and the housing assembly (100) for attaching the lens assembly (170) and the housing assembly (100) to each other.
